# EUROPÄISCHE PATENTSCHRIFT

(11) **EP 0 626 530 B1**
(45) Veröffentlichungstag und Bekanntmachung des Hinweises auf die Patenterteilung: **31.03.1999**
(21) Anmeldenummer: 94107764.6
(22) Anmeldetag: 19.05.1994
(51) Int. Cl.: F16K 3/26, B62D 6/02, F16K 31/363

(54) **Ventilanordnung**
Valve arrangement
Arrangement de soupape

(30) Priorität: 28.05.1993 DE 4317880; 16.10.1993 DE 4335377
(43) Veröffentlichungstag der Anmeldung: 30.11.1994
(73) Patentinhaber: LuK Fahrzeug-Hydraulik GmbH & Co. KG, 61352 Bad Homburg (DE)
(72) Erfinder: Nguyen, Van Doan, D-60437 Frankfurt (DE); Gong, Yuejin, D-61350 Bad Homburg (DE); Körtge, Randolf, D-61250 Usingen (DE); Lauth, Hans-Jürgen, D-61250 Usingen (DE); Overdiek, Gerhard, D-61382 Friedrichsdorf (DE); Parsch, Willi, D-64404 Bickenback (DE); Nied-Menninger, Thomas, D-61250 Usingen (DE)
(74) Vertreter: Gleiss, Alf-Olav, Dr.jur. Dipl.-Ing.

(56) Entgegenhaltungen:
- EP-A- 0 400 152
- EP-A- 0 423 469
- FR-A- 1 135 029
- FR-A- 2 425 005
- US-A- 3 314 495
- US-A- 3 512 550
- US-A- 4 311 161
- US-A- 4 361 166
- US-A- 5 143 119

## Beschreibung

Die Erfindung betrifft eine Ventilanordnung für eine hydraulische Fördereinrichtung, insbesondere für eine Lenkhilfpumpe, gemäß Oberbegriff des Anspruchs 1.

Ventilanordnungen der hier angesprochenen Art dienen beispielsweise dazu, den von der Fördereinrichtung an einen Verbraucher abgegebenen Fluidstrom zu regeln. Sie werden dann auch als Stromregelventil bezeichnet. Es ist bekannt, daß Ventilanordnungen dieser Art einen in einer Ventilbohrung verschiebbaren Kolben aufweisen, dessen Außenwand dichtend an der Innenfläche der Ventilbohrung, das heißt, der die Ventilanordnung aufnehmenden Bohrung, dichtend anliegen. Es zeigt sich, daß zwischen den aneinanderliegenden Flächen der Bohrung beziehungsweise des als Schieberventil wirkenden Kolbens Verluste auftreten, die als Leckölverluste bezeichnet werden. Die hydraulische Fördereinrichtung muß demnach ständig einen gewissen zusätzlichen Fluidstrom zur Verfügung stellen, um derartige Leckageverluste auszugleichen.

Aus der EP 0 400 152 A1 ist eine Ventilanordnung bekannt, bei der ein Kolben innerhalb einer Bohrung dichtend geführt ist und zwei benachbarte Kanäle mittels einer Sitz-Schieber-Ventilkombination abdichtet. Das Sitzventil wird hierbei durch einen konischen Abschnitt des Ventilkolbens und einer feststehenden Steuerkante der Bohrung gebildet. Der Kolben muß demnach einen Abschnitt aufweisen, der die Steuerkante der Bohrung hintergreift, das heißt, dieser Abschnitt des Kolbens muß einen größeren Durchmesser als die den Kolben aufnehmende Bohrung besitzen. Hierdurch läßt sich diese Anordnung nur aufwendig realisieren. Eine Nachrüstung einer bestehenden Ventilanordnung ist ausgeschlossen, da zur Ausbildung des Sitzventils die Steuerkante an der den Kolben aufnehmenden Bohrung nachträglich nicht herstellbar ist.

Es ist demgegenüber Aufgabe der Erfindung, eine Ventilanordnung für eine hydraulische Fördereinrichtung zu schaffen, die sich durch ein wesentlich verbessertes Dichtungsverhalten auszeichnet und trotzdem die gute Regelstabilität eines Schiebers aufweist.

Diese Aufgabe wird bei einer Ventilanordnung gemäß Oberbegriff des Anspruchs 1 mit Hilfe der in diesem Anspruch genannten Merkmale gelöst. Dadurch, daß das Sitzventil von einer auf einem Außendurchmesser des Kolbens verlaufenden Steuerkante und einem in die Bohrung eingesetzten Dichtring gebildet ist, dessen Dichtfläche einen ersten Bereich, dessen Innendurchmesser größer ist als der Außendurchmesser des Kolbens, und einen zweiten Bereich, dessen Innendurchmesser kleiner ist als der Außendurchmesser des Kolbens, aufweist, wird eine Ventilanordnung geschaffen, mit der einerseits eine gute Abdichtung zwischen den zwei in die Bohrung mündenden Kanälen erreicht wird und die kostengünstig herstellbar ist. Durch die Ausbildung des zusätzlichen Sitzventils durch die auf den Außendurchmesser des Kolbens liegende Steuerkante des Kolbens und einem in die Ventilbohrung eingebrachten Dichtring, kann der Kolben als Standardkolben ausgebildet werden und die entsprechende Ausbildung des Sitzventils über den zusätzlichen Dichtring erreicht werden. Insbesondere ist vorteilhaft, daß der Dichtring auch nachträglich in bestehende Ventileinrichtungen eingebracht werden kann, so daß bei bestehenden Ventileinrichtungen das Leckageverhalten deutlich verbessert werden kann.

Insbesondere wenn der Dichtring bevorzugt gemäß der Ansprüche 2 und 4 Bestandteil einer in die den Kolben aufnehmenden Bohrung eingesetzten Dichthülse oder als axiale Verlängerung eines in die den Kolben aufnehmende Bohrung einbringbaren Stopfens ausgebildet ist, läßt sich sehr vorteilhaft die Nachrüstung bestehender Ventilanordnungen erreichen. Gleichzeitig ist die Ausbildung des Sitz-Schieber-Ventils zwischen den in die Bohrung mündenden Kanälen durch einfaches Einbringen der Dichthülse beziehungsweise des Stopfens in die Bohrung möglich, wobei die Dichthülse und/oder der Stopfen gleichzeitig noch Fluidverbindungen für ein zu förderndes Medium besitzen. Somit kann eine sehr kompakte, wenige Einzelteile aufweisende Ventilanordnung geschaffen werden, die sich durch ein optimales Dicht- und Regelverhalten auszeichnet.

Weiterhin wird ein Ausführungsbeispiel der Ventilanordnung bevorzugt, bei der die konische Dichtfläche Teil eines in die Ventilbohrung eingesetzten Dichtringes ist, dessen Innenraum mit einem Kanal in hydraulischer Verbindung steht, der in der Innenwand der Ventilbohrung mündet. Die Hülse läßt sich gut im Inneren der hydraulischen Fördereinrichtung sichern und ist relativ einfach einbringbar.

In bevorzugter Ausgestaltung der Ventilanordnung ist vorgesehen, daß der Ventilring durch eine axiale Verlängerung eines Stopfens, der vorzugsweise Bestandteil einer integrierten Förderstromdrossel ist, gebildet ist. Hiermit wird in einfacher Weise erreicht, daß das Gegenstück des Sitzventils gleichzeitig mit dem Stopfen gefertigt werden kann und beispielsweise als Einschraubpatrone in das Ventilgehäuse eingeschraubt werden kann.

Besonders bevorzugt wird eine Ventilanordnung, die ein Stromregelventil mit einem auch als Steuerkolben bezeichneten Kolben umfaßt, der mit der konischen Dichtfläche zusammenwirkt. Ein auf diese Weise realisiertes Stromregelventil zeichnet sich einerseits durch ein optimales Dichtverhalten im Bereich des Sitzventils aus, andererseits dadurch, daß das Regelverhalten des Stromregelventils im übrigen praktisch unverändert bleibt, insbesondere eine sanfte Regelung gewährleistet ist, wie sie mit Schieberventilen realisiert werden.

Weitere vorteilhafte Ausgestaltungen der Erfindung ergeben sich aus den übrigen, in den Unteransprüchen genannten Merkmalen.

Die Erfindung wird im folgenden anhand der Zeichnungen erläutert. Es zeigen:
- Figur 1: einen Längsschnitt durch ein erstes Ausführungsbeispiel einer Ventilanordung;
- Figur 2: einen Längsschnitt durch ein zweites Ausführungsbeispiel einer Ventilanordnung und
- Figur 3: einen Längsschnitt durch ein drittes Ausführungsbeispiel einer Ventilanordnung.

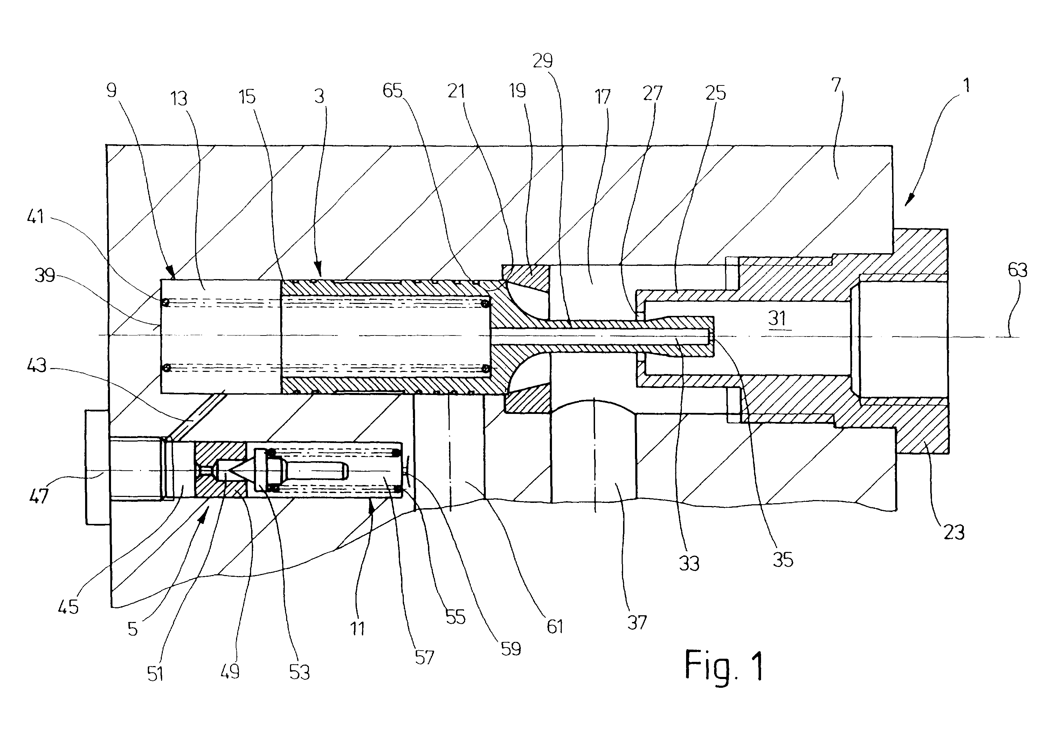

Die in der Figur 1 dargestellte Ventilanordnung 1 umfaßt ein Stromregelventil 3 sowie ein Druckbegrenzungsventil 5. Beide Ventile sind in Ausnehmungen untergebracht, die in ein Gehäuse 7 der Fördereinrichtung beziehungsweise in das Gehäuse der Lenkhilfpumpe eingebracht sind. Beide Ausnehmungen sind hier als einseitig offene Bohrungen ausgebildet, wobei eine erste Bohrung 9 das Stromregelventil 3 und eine zweite Bohrung 11 das Druckbegrenzungsventil 5 aufnimmt.

Die erste Bohrung 9 ist als Stufenbohrung ausgebildet, in deren ersten Abschnitt 13 ein Kolben 15 des Stromregelventils 3 angeordnet ist. In einem zweiten Abschnitt 17, der einen größeren Innendurchmesser als der erste Abschnitt 13 aufweist, ist ein Ring 19 eingepreßt, der eine konische Dichtfläche 21 aufweist. Diese zeichnet sich durch einen ersten Bereich aus, dessen Innendurchmesser größer ist als der Außendurchmesser des Kolbens 15 und durch einen zweiten Bereich, dessen Innendurchmesser kleiner ist als der Außendurchmesser des Kolbens 15. Die Innenfläche des Rings 19 kann im übrigen frei ausgestaltet sein. Die Dichtfläche 21 ist kreisförmig ausgebildet. Sie stellt einen umlaufenden Teilabschnitt einer Kegelfläche dar, dessen Öffnungswinkel beispielsweise etwa 45° beträgt, und der sich in Richtung zu dem Kolben 15 öffnet. Die sich an die Dichtfläche 21 anschließende Innenfläche des Rings 19 kann - wie hier in Figur 1 dargestellt - ebenfalls konisch ausgebildet sein und einen Teil einer Kegelmantelfläche darstellen, der einen Öffnungswinkel von etwa 10° bis 20° aufweist, und der sich ebenfalls in Richtung auf den Kolben 15 öffnet.

Der zweite Abschnitt 17 der Bohrung 9 wird durch einen Anschlußstopfen 23 abgeschlossen, der einen sich in das Innere des zweiten Abschnitts 17 erstreckenden Ansatz 25 aufweist, der mit einer Öffnung 27 versehen ist, durch die ein vom Kolben 15 ausgehender Dorn 29 in den Innenraum 31 des Anschlußstopfens 23 hineinragt. Der Dorn 29 ist mit einem Durchgangskanal 33 versehen, der sich über eine Blende 35 in den Innenraum 31 öffnet. Die Blende 35 weist eine geringere lichte Weite auf als der Durchgangskanal 33.

Über den Anschlußstopfen 23 ist ein Verbraucher, beispielsweise ein Lenkgetriebe, an die hydraulische Fördereinrichtung beziehungsweise die Lenkhilfpumpe angeschlossen.

In den zweiten Abschnitt 17 mündet ein erster Kanal 37, der mit der Ausgangsseite der Fördereinrichtung, das heißt, mit der Druckseite der Lenkhilfpumpe verbunden ist.

Am Grund 39 der ersten Bohrung 9 stützt sich ein als Schraubenfeder 41 ausgebildetes Federelement ab, das auf die linke Seite des Kolbens 15 einwirkt und diesen nach rechts gegen den Ring 19 drängt. Der Kolben 15 ist hier hohl ausgebildet, so daß die Schraubenfeder 41 teilweise im Inneren des Kolbens 15 verläuft. Die Länge des Kolbens 15 ist so gewählt, daß er einen vom ersten Abschnitt 13 der ersten Bohrung 9 ausgehenden Druckkanal 43 auch bei einer gegen die Druckkraft der Schraubenfeder 41 verlaufenden Bewegung nach links nicht abschließt. Der Druckkanal 43 verbindet den ersten Abschnitt 13 mit einer ersten Druckkammer 45 der zweiten Bohrung 11. Die Druckkammer 45 ist nach außen durch einen Stopfen 47 druckdicht abgeschlossen. Sie wird andererseits von einem Ventil abgeschlossen, das ein Widerlager 49 mit einem Durchgangskanal 51 aufweist, der durch einen Verschlußkörper 53 abgeschlossen wird, der durch die Kraft einer Schraubenfeder 55 von rechts nach links gegen die Mündung des Durchgangskanals 51 gedrängt wird. Durch den Verschlußkörper 53 wird also die erste Druckkammer von einer zweiten Druckkammer 57 abgeschlossen, in der ein Auslaßkanal 59 mündet, der beispielsweise mit dem Tank der Fördereinrichtung beziehungsweise Lenkhilfpumpe verbunden ist.

Der Außendurchmesser des Kolbens 15 ist so gewählt, daß dieser druckdicht an der Innenfläche der ersten Bohrung 9 anliegt. Auf diese Weise verschließt der Kolben einen die Innenfläche der ersten Bohrung 9 durchdringenden zweiten Kanal druckdicht ab, wobei der Kolben die Mündung des Kanals, der bei dem hier dargestellten Ausführungsbeispiel senkrecht zur Mittelachse 63 der Bohrung 9 verläuft, sowohl gegen den ersten Abschnitt 13 als auch gegenüber dem zweiten Abschnitt 17 der Bohrung druckdicht abgeschlossen ist. Der Kolben wirkt hier also als Schieberventil.

In der Schnittdarstellung gemäß Figur 1 wird, wie gesagt, der Kolben 15 mit seiner hier rechts angeordneten ringförmig umlaufenden Außenkante 65 gegen die konische Dichtfläche 21 gedrängt, so daß in diesem Bereich eine Sitzdichtung erreicht wird.

Wenn der Kolben 15 am Ring 19 anliegt, erstreckt sich der vom Grundkörper des Kolbens ausgehende Dorn 29 durch den zweiten Abschnitt 17 der ersten Bohrung 9. Der Außendurchmesser des Dorns ist so klein, das heißt, wesentlich kleiner als der Außendurchmesser des übrigen Kolbens 15, daß im Bereich des zweiten Abschnitts 17 ein mit dem ersten Kanal 37 in Verbindung stehender Druckraum gebildet wird. Dieser ist über die Öffnung 27, durch die der Dorn 29 hindurch ragt, mit dem Innenraum 31 des Anschlußstopfens 27 verbunden. Der Außendurchmesser des Dorns nimmt rampenartig in dem Bereich zu, der jenseits der Öffnung 27 im Innenraum 31 angeordnet ist. Der maximale Außendurchmesser des Dorns 29 ist kleiner als der Innendurchmesser der Öffnung 27. Wenn sich der Kolben 15 nach links verlagert, gelangt ein hier rampenartig ansteigender Außendurchmesserbereich des Dorns 29 in die Öffnung 27, so daß die freibleibende Ringöffnung zwischen Dorn und Außenfläche der Öffnung 27 verengt wird.

Der Durchgangskanal 33, der den Dorn 29 vollständig durchdringt, verbindet den Innenraum 31 im Anschlußstopfen 23 mit dem ersten Abschnitt 13 der ersten Bohrung 9, der seinerseits über den Druckkanal 43 mit der ersten Druckkammer 45 des Druckbegrenzungsventils 5 in hydraulischer Verbindung steht. Auf den Kolben 15 wirken also von rechts Druckkräfte, die durch einen Druck im zweiten Abschnitt 17 gegeben sind; von links wirken Druckkräfte, die durch die Druckverhältnisse im ersten Abschnitt 13 der Bohrung 9 vorgegeben sind. Dabei wird über den Durchgangskanal 33 und die Meßblende 35 der im Innenraum 31 gegebene Druck auf die linke Seite des Kolbens 15 übertragen.

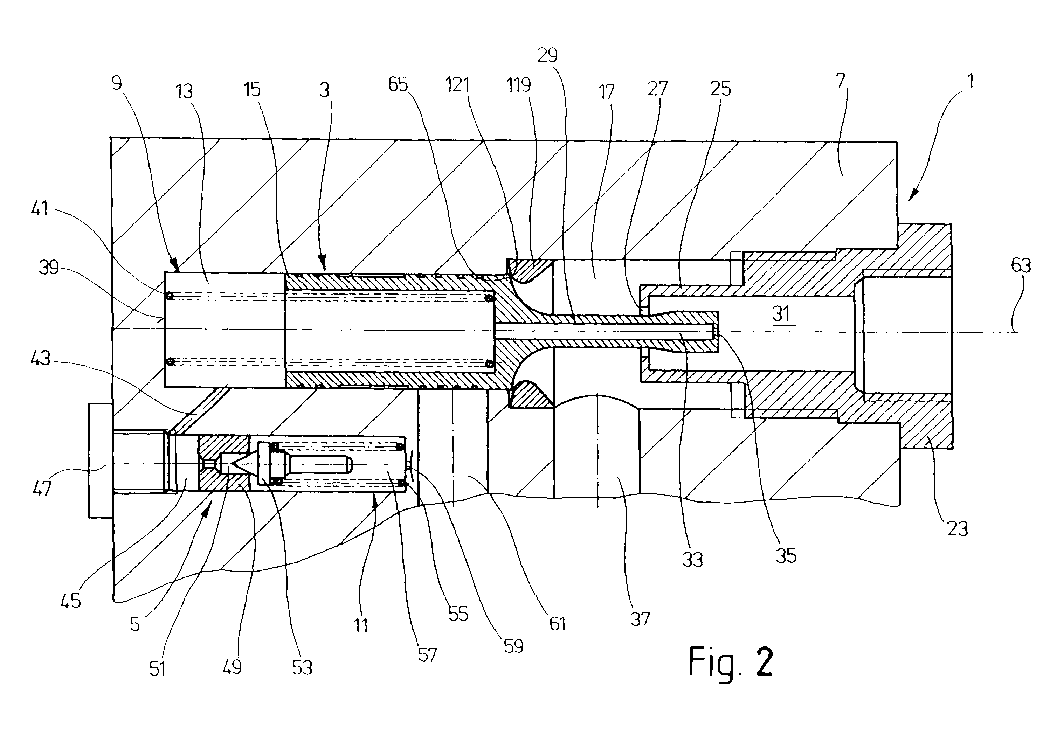

Figur 2 zeigt ein weiteres Ausführungsbeispiel einer Ventilanordnung 1, die sich von der in Figur 1 dargestellten Version nur durch die Ausgestaltung des Rings 119 unterscheidet, der gemeinsam mit der rechten Kante des Kolbens 15 ein Sitzventil bildet. Im übrigen sind sämtliche Teile der Ventilanordnung identisch, so daß einerseits gleiche Bezugsziffern gewählt wurden und andererseits auf die Beschreibung zu Figur 1 verwiesen wird.

Der Querschnitt des Rings 119 ist so gewählt, daß er einerseits eine Dichtfläche 121 aufweist, die der Dichtfläche 21 des Rings 19 bei dem in Figur 1 dargestellten Ausführungsbeispiel entspricht, und andererseits als sich zum zweiten Abschnitt 17 öffnender Trichter ausgebildet ist. Auf die Weise kann ein sehr hoher Fluidstrom von der Ausgangsseite der Pumpe zu deren Ansaugseite gelangen, wenn das Stromregelventil die Verbindung zwischen dem ersten Kanal 37 und dem zweiten Kanal 61 freigibt.

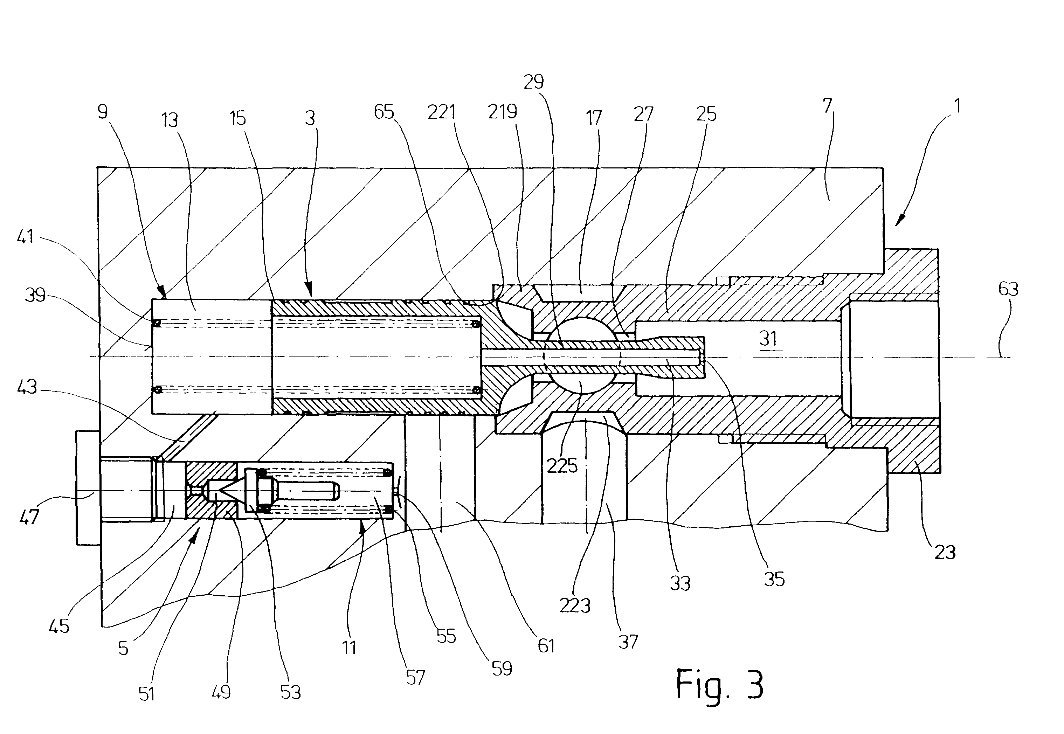

Figur 3 zeigt schließlich ein drittes Ausführungsbeispiel einer Ventilanordnung 1, die sich lediglich in der Ausgestaltung des Sitzventils von den übrigen Ausführungsbeispielen unterscheidet. Daher sind auch hier Teile mit gleichen Bezugsziffern versehen, die mit denen der Figuren 1 und 2 übereinstimmen. Insofern wird auf die Beschreibung zu den vorangegangenen Figuren verwiesen.

Bei dem Ausführungsbeispiel gemäß Figur 3 wird mit dem rechten Ende des Kolbens 15 ein Sitzventil dadurch geschaffen, daß eine von dem Anschlußstopfen 23 ausgehende Hülse sich bis zu der Außenkante 65 des Kolbens 15 erstreckt und in dessen Anlagebereich eine Dichtfläche 221 aufweist. Die Hülse 219 kann einstückig mit dem Anschlußstopfen 23 ausgebildet sein oder ein von diesem getrenntes Teil darstellen. Sie weist im Bereich der Mündung des ersten Kanals 37 eine in ihre Außenwandung eingeschnitte, vorzugsweise umlaufende Ringnut 223 auf, in deren Nutgrund mindestens eine, vorzugsweise drei gleichförmig in Umfangsrichtung beabstandete Einlaßöffnungen 225 vorgesehen sind. Dadurch, daß der erste Kanal 37 in einer Ringnut mündet, wird das einströmende Öl verteilt und trifft nicht einseitig auf den Dorn 29 auf. Es werden somit Verlagerungen des Kolbens 15 vermieden, der ansonsten zum Verklemmen, zumindest aber zu einer erhöhten Reibung innerhalb der ersten Bohrung 9, neigen könnte. Durch die in gleichen Umfangsabständen angeordneten Öffnungen 225 trifft das von der Pumpe gelieferte Fluid den Dorn 29 von mehreren Seiten, so daß dieser praktisch keinen Kräften ausgesetzt ist, die eine Auslenkung von der Mittelachse 63 bewirken könnten.

Die Hülse 219 ist so lang gewählt, daß sie als Anschlag für den Kolben 15 dient, so daß dessen Außenkante 65 dichtend an der Dichtungsfläche 221 anliegt. Sollte die Hülse 219 als getrenntes Teil ausgebildet sein, ist sie entweder in die Bohrung so eingepreßt, daß sie von dem Kolben 15 nicht verlagert wird. Es ist auch möglich, die Länge der Hülse so zu wählen, daß sie sich mit ihrem dem Kolben 15 abgewandten Ende am Anschlußstopfen 23 abstützen kann.

Bei allen in den Figuren 1 bis 3 dargestellten Ausbildungsbeispielen ist es auch denkbar, daß sowohl der Kolben 15 als auch die verschiedenen Ringe 19, 119 und 219 Anschlagflächen aufweisen, die senkrecht zur Mittelachse 63 angeordnet sind. In den Berührungsbereich können auch elastische Dichtungsringe eingebracht werden, die die Funktion eines Sitzventils gewährleisten.

Schließlich ist es auch möglich, den Ring 19, 119 beziehungsweise die Hülse 219 zumindest im Berührungsbereich mit dem Kolben 15 durch einen elastischen Ringabschnitt zu realisieren, der sich durch den Auflagedruck des Kolbens 15 so verformt, daß eine Sitzdichtung gewährleistet ist.

Zur Funktion der in den Figuren 1 bis 3 dargestellten Ventilanordnung 1 ist folgendes festzuhalten:

Durch die hydraulische Fördereinrichtung wird ein Medium, beispielsweise Öl über den ersten Kanal 37 in den zweiten Abschnitt 17 der Bohrung 19 gefördert. Das Öl gelangt durch die Ringöffnung, die durch die Öffnung 27 und den diesen durchdringenden Dorn 29 gebildet wird, in den Innenraum 31 des Anschlußstopfens 23 und von dort zu dem hydraulischen Verbraucher, beispielsweise zum Lenkgetriebe. Der Kolben 15 wird gegen den im zweiten Abschnitt 17 herrschenden Druck von der Schraubenfeder 41 gegen den Dichtring 19, 119 beziehungsweise 219 gedrängt, so daß die Außenkante 65 des Kolbens 15 dichtend an der Dichtfläche 21, 121 beziehungsweise 221 anliegt, wobei eine Sitzdichtung realisiert wird und praktisch keine Leckölverluste zum zweiten Kanal 61 auftreten. Steigt der Druck im zweiten Abschnitt 17, wird der Kolben 15 schließlich gegen die Kraft der entsprechend eingestellten Schraubenfeder 41 nach links verschoben, so daß die Außenkante 65 von der Dichtfläche 21, 121 beziehungsweise 221 abhebt. Gleichzeitig gelangt ein Bereich des Dorns 29 in die Öffnung 27, der einen zunehmenden Außendurchmesser aufweist. Die freie Ringfläche um den Dorn 29 herum wird also verkleinert, so daß bei steigendem Druck im zweiten Abschnitt 17, das heißt, beispielsweise bei zunehmender Drehzahl der die Lenkhilfpumpe antreibenden Brennkraftmaschine, insbesondere bei zunehmendem auf die gelenkten Räder wirkenden Kräften, ein abnehmender Fluidstrom zum Verbraucher geliefert wird, der beispielsweise von ca. 8 l/min auf etwa 4 l/min absinken kann.

Steigt der Druck im zweiten Abschnitt 17 der Bohrung 9 an, erreicht die Außenkante 65 durch die Verlagerung des Kolbens 15 nach links schließlich die Mündung des zweiten Kanals 61, so daß die Abdichtung dieses Kanals gegenüber dem ersten Kanal 37 nicht mehr vollständig gegeben ist. Das von der Auslaßseite der Pumpe durch den ersten Kanal 37 geförderte Fluid kann also in den zweiten Kanal 61 abströmen, der beispielsweise mit der Ansaugseite der Lenkhilfpumpe verbunden ist und auch als Booster-Kanal bezeichnet wird. Bei steigendem Druck gibt die Außenkante 65 immer größere Bereiche der Mündung des zweiten Kanals 61 frei, wobei von der - in Projektion gesehen - kreisförmigen Mündung des zweiten Kanals 61 immer größere Bereiche freigegeben werden. Die Außenkante 65 überläuft die kreisförmige Mündungsfläche und gibt zunächst kreisabschnittsförmige Mündungsbereiche frei, das heißt, es ergibt sich eine sanfte Abregelung des im zweiten Abschnitt 17 der Bohrung 9 gegebenen Drucks, außerdem eine sehr gute Regelstabilität.

Während also das Stromregelventil 3 zunächst im geschlossenen Zustand ein Sitzventil-Verhalten zeigt, während die Außenkante 65 auf der Dichtfläche 21, 121 beziehungsweise 221 aufliegt, ergibt sich nun ein Regelverhalten des Stromregelventils 3, wie es von üblichen Schieberventilen bekannt ist.

Die Außenkante 65 verhindert im Zusammenspiel mit der Dichtfläche 21 im geschlossenen Zustand des Stromregelventils 3 eine praktisch absolute Dichtheit gegenüber Leckageverlusten vom ersten Kanal 37 zum zweiten Kanal 61, also zwischen Auslaß- und Ansaugseite der Fördereinrichtung. Verlagert sich jedoch der Kolben 15 des Stromregelventils 3, hebt die Außenkante 65 von der Dichtfläche 21 ab, und das Stromregelventil 3 zeigt das übliche Schieber-Ventil-Verhalten.

Unter Beibehaltung der gewünschten Regeleigenschaften kann also durch das Sitzventil, das durch die Außenkante 65 und die Dichtfläche 21 realisiert wird, eine sehr hohe Dichtheit gegenüber Leckageverlusten erzielt werden.

Die Breite der Ringe 19 und 119 ist hier so gewählt, daß sie den Mündungsbereich des ersten Kanals 37 allenfalls berühren. Es ist - entsprechend den Erläuterungen zu Figur 3 - jedoch auch möglich, die Dichtfläche 221 an der linken Stirnseite einer Hülse 219 vorzusehen, die in den zweiten Abschnitt 17 der Bohrung 9 eingebracht wird, dann allerdings mindestens eine Durchgangsöffnung für die Mündung des ersten Kanals 37 aufweisen muß, so daß von der Fördereinrichtung beziehungsweise der Lenkhilfpumpe angeliefertes Öl einerseits auf die rechte Seite des Kolbens 15 wirken kann, andererseits durch die Ringöffnung um den Dorn 29 in den Innenraum 31 und von dort zum Verbraucher gelangen kann.

In allen Fällen ist es möglich, bestehende Fördereinrichtungen nachträglich mit einem Dichtring beziehungsweise mit einer Dichthülse auszustatten. Dazu ist es lediglich erforderlich, die Bohrung 9 im Bereich des zweiten Abschnitts 17 aufzubohren, um den Ring 19 beziehungsweise eine Dichthülse einführen zu können. Der Anschlußstopfen 23 muß entsprechend angepaßt werden, daß er auch bei einer Durchmesservergrößerung der Bohrung 9 sicheren Halt im Gehäuse 7 der Fördereinrichtung beziehungsweise Lenkhilfpumpe findet.

Insgesamt zeigt sich, daß das gewünschte sanfte und stabile Regelverhalten des Stromregelventils beibehalten werden kann, wobei gleichzeitig Leckageverluste minimierbar sind.

Der Vollständigkeit halber sei noch darauf verwiesen, daß der im Innenraum 31 herrschende Druck durch den Durchgangskanal 33 auf den ersten Abschnitt 13 übertragen wird und über den Druckkanal 43 auf das Druckbegrenzungsventil 5 wirkt. Der Kolben 15 wird also von rechts mit dem von der Pumpe bereitgestellten Druck und von links mit dem an den Verbraucher abgegebenen Druck beaufschlagt. Steigt der Druck links vom Kolben 15, das heißt, im ersten Abschnitt 13, über einen vorgebbaren Wert von beispielsweise 100 bis 110 bar, spricht das Druckbegrenzungsventil 5 an. Das heißt, der Verschlußkörper 53 wird gegen die Kraft der Schraubenfeder 55 vom Mündungsbereich des das Widerlager 49 durchdringenden Durchgangskanals 51 abgehoben, so daß das Druckmedium, also das Öl von dem ersten Abschnitt 13 durch den Druckkanal 53 in die erste Druckkammer 45 und von dort durch den Durchgangskanal 51 im Widerlager 49 um den Verschlußkörper 53 herum in die zweite Druckkammer 57 strömen und von dort in den Auslaßkanal 59 gelangen kann, der beispielsweise mit dem Tank oder der Ansaugseite der Fördereinrichtung beziehungsweise Lenkhilfpumpe verbunden ist. Durch den auf der linken Seite des Kolbens 15 bei Auslösen des Druckbegrenzungsventils 5 begrenzten Druck kann der Kolben 15 bei noch steigendem Systemdruck noch weiter nach links verlagert werden, so daß die Querschnittsfläche der Verbindung zwischen dem ersten Kanal 37 und dem zweiten Kanal 61 vergrößert wird. Das heißt, bei Auslösen des Druckbegrenzungsventils verlagert sich der Kolben nach links, so daß der Druck im zweiten Abschnitt 17 der Bohrung 9 nicht weiter steigen kann. Durch die Blende 35 wird verhindert, daß zuviel Öl in den ersten Abschnitt 13 nachdringen kann. Der hier herrschende Druck kann sich schließlich auf ein Gleichgewicht einstellen, wobei der Druck im zweiten Abschnitt durch einen gezielten Abfluß vom ersten Kanal 37 zum zweiten Kanal 61 konstant gehalten wird. Sollte der Druck steigen, wird der Kolben 15 gegen die Kraft der Schraubenfeder 41 nach links ausgelenkt, so daß eine größere Fläche der Mündung des zweiten Kanals 61 in die erste Bohrung 9 freigegeben wird.

Es zeigt sich also, daß durch die hier vorgegebene Ausgestaltung der Ventilanordnung deren bereits bekannte Funktion nicht nachteilig beeinflußt wird, insbesondere bleibt die durch das Schieber-Ventil-Verhalten gekennzeichnete Abregelcharakteristik des Stromregelventils nach dem Auslösen beziehungsweise Öffnen des durch den Kolben und den Dichtring beziehungsweise die Dichthülse gebildeten Sitzventils erhalten. Dabei werden Leckölverluste im Bereich des Kolbens 15 minimiert.

## Patentansprüche

1. Ventilanordnung für eine hydraulische Fördereinrichtung, insbesondere für eine Lenkhilfpumpe, mit einem in einer Bohrung (9) axial geführten Kolben (15), der druckabhängig innerhalb der Bohrung gegen die Kraft einer Federeinrichtung (41) verschiebbar ist, dessen Außenwand - zur Ausbildung eines Schieberventils - dichtend an der Innenwand der Bohrung anliegt und der mit einem als Sitzventil wirkenden Abschnitt ausgestattet ist, so daß in die Innenwand der Bohrung in einem axialen Abstand zueinander mündende Kanäle durch eine Sitz-Schieber-Ventilkombination abgedichtet sind, **dadurch gekennzeichnet**, daß das Sitzventil von einer auf einem Außendurchmesser des Kolbens (15) verlaufenden Steuerkante (65) und einem in die Bohrung (9) eingesetzten Dichtring (19, 119, 219) gebildet ist, dessen Dichtfläche (21, 221) einen ersten Bereich, dessen Innendurchmesser größer ist als der Außendurchmesser des Kolbens (15), und einen zweiten Bereich, dessen Innendurchmesser kleiner ist als der Außendurchmesser des Kolbens (15), aufweist.

2. Ventilanordnung nach Anspruch 1, **dadurch gekennzeichnet,** daß die Dichtfläche (221) Teil eines in die Bohrung (9) eingesetzten hülsenförmigen Dichtringes (219) ist, dessen Innenraum hydraulisch verbunden ist mit einem in der Innenwand der Bohrung (9) mündenden ersten Kanal (37).

3. Ventilanordnung nach einem der vorhergehenden Ansprüche, **dadurch gekennzeichnet,** daß die Dichtfläche (21, 221) Teil eines gedachten Kegelmantels ist, der sich in Richtung auf den Kolben (15) öffnet.

4. Ventilanordnung nach einem der vorhergehenden Ansprüche, **dadurch gekennzeichnet,** daß der Dichtring (219) durch eine axiale Verlängerung eines Stopfens (23) gebildet ist, der in den den Kolben (15) aufnehmenden Innenraum (Bohrung 9) einbringbar ist.

5. Ventilanordnung nach einem der vorhergehenden Ansprüche, **dadurch gekennzeichnet,** daß die Ventilanordnung ein Stromregelventil (3) umfaßt und daß der Kolben (15) Teil dieses Stromregelventils (3) ist.

## Claims

1. A valve arrangement for a hydraulic conveying device, in particular for a power-steering pump, with a piston (15) which is guided axially in a bore (9) and which is displaceable inside the bore against the force of a spring device (41) as a function of pressure [and] the outer wall of which rests in a sealed manner against the inner wall of the bore so as to form a slide valve and which is provided with a portion acting as a seat valve, so that ducts opening into the inner wall of the bore at an axial distance from one another are sealed off by a combination of the seat valve and slide valve, **characterized in that** the seat valve is formed by a control edge (65) extending on an external diameter of the piston (15) and by a sealing ring (19, 119, 219) which is inserted in the bore (9) and the sealing face (21, 221) of which has a first area, the internal diameter of which is larger than the external diameter of the piston (15), and a second area, the internal diameter of which is smaller than the external diameter of the piston (15).

2. A valve arrangement according to Claim 1, **characterized in that** the sealing face (221) is part of a sleeve-shaped sealing ring (219) which is inserted in the bore (9) and the interior of which is connected hydraulically to a first duct (37) opening into the inner wall of the bore (9).

3. A valve arrangement according to one of the preceding Claims, **characterized in that** the sealing face (21, 221) is part of a notional conical face which opens out in the direction towards the piston (15).

4. A valve arrangement according to one of the preceding Claims, **characterized in that** the sealing ring (219) is formed by an axial extension of a plug (23) which can be inserted into the interior (bore 9) receiving the piston (15).

5. A valve arrangement according to one of the preceding Claims, **characterized in that** the valve arrangement comprises a flow-control valve (3), and the piston (15) is part of the said flow-control valve (3).

## Revendications

1. Arrangement de soupape pour un dispositif de circulation hydraulique, notamment pour une pompe de servo-direction avec un piston (15) guidé axialement dans un trou (9) et déplaçable, en fonction de la pression, à l'intérieur de ce trou contre la force d'un dispositif à ressort (41), dont la paroi extérieure - pour la formation d'une soupape à coulisse - est adjacente de façon étanche à la paroi intérieure du trou et qui est muni d'une section agissant comme soupape à siège, de sorte que des canaux débouchant dans la paroi intérieure du trou avec un écart axial mutuel sont rendus étanches par une association de soupape à siège et à coulisse, **caractérisé en ce** que la soupape à siège est formée par une arête de commande (65) s'étendant sur un diamètre extérieur du piston (15) et par une bague d'étanchéité (19, 119, 219) insérée dans le trou (9), bague dont la surface d'étanchéité (21, 221) présente une première partie dont le diamètre intérieur est supérieur au diamètre extérieur du piston (15), et une seconde partie dont le diamètre intérieur est inférieur au diamètre extérieur du piston (15).

2. Arrangement de soupape selon la revendication 1, **caractérisé en ce** que la surface d'étanchéité (221) est une partie d'une bague d'étanchéité (219) en forme de douille insérée dans le trou (9), dont l'espace intérieur est raccordé hydrauliquement à un premier canal (37) débouchant dans la paroi intérieure du trou (9).

3. Arrangement de soupape selon l'une des revendications précédentes, **caractérisé en ce** que la surface d'étanchéité (21, 221) est une partie d'une aire latérale de cône imaginaire qui s'ouvre en direction du piston (15).

4. Arrangement de soupape selon l'une des revendications précédentes, **caractérisé en ce** que la bague d'étanchéité (219) est formée par un prolongement axial d'un bouchon (23), lequel peut être placé dans l'espace intérieur (trou 9) logeant le piston (15).

5. Arrangement de soupape selon l'une des revendications précédentes, **caractérisé en ce** que l'arrangement de soupape comprend une soupape de réglage du débit (3) et que le piston (15) est une partie de cette soupape de réglage du débit (3).
